(19) **Europäisches Patentamt European Patent Office Office européen des brevets**

(11) **EP 4 134 878 B1**

(12) **EUROPEAN PATENT SPECIFICATION**

(45) Date of publication and mention of the grant of the patent:
**26.02.2025 Bulletin 2025/09**

(21) Application number: **22216178.8**

(22) Date of filing: **22.12.2022**

(51) International Patent Classification (IPC):
$G06N\ 3/092^{(2023.01)}$   $G06N\ 3/006^{(2023.01)}$
$G06N\ 3/0442^{(2023.01)}$   $G06N\ 3/0455^{(2023.01)}$
$G06N\ 3/0985^{(2023.01)}$   $G06F\ 18/27^{(2023.01)}$

(52) Cooperative Patent Classification (CPC):
**G06N 3/092; G06N 3/006; G06N 3/0442;
G06N 3/0455; G06N 3/0985;** G06F 18/27;
Y02T 10/40

(54) **METHOD AND APPARATUS FOR TRAINING A MODEL, AND METHOD AND APPARATUS FOR PREDICTING A TRAJECTORY**

VERFAHREN UND VORRICHTUNG ZUM TRAINIEREN EINES MODELLS, UND VERFAHREN UND VORRICHTUNG ZUR VORHERSAGE EINER TRAJEKTORIE

PROCÉDÉ ET APPAREIL D'APPRENTISSAGE D'UN MODÈLE, ET PROCÉDÉ ET APPAREIL DE PRÉDICTION D'UNE TRAJECTOIRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **11.03.2022 CN 202210244263**

(43) Date of publication of application:
**15.02.2023 Bulletin 2023/07**

(73) Proprietor: **Apollo Intelligent Driving Technology (Beijing) Co., Ltd.
Haidian District
Beijing 100085 (CN)**

(72) Inventors:
• **ZHENG, Xinyue**
 **Beijing, 100085 (CN)**
• **LIU, Changchun**
 **Beijing, 100085 (CN)**
• **ZHU, Zhenguang**
 **Beijing, 100085 (CN)**
• **SUN, Hao**
 **Beijing, 100085 (CN)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(56) References cited:
**WO-A1-2021/058588     CN-A- 110 647 839**

• **KHADIJA SHAHEEN ET AL: "Continual Learning for Real-World Autonomous Systems: Algorithms, Challenges and Frameworks", ARXIV.ORG, CORNELL UNIVERSITY LIBRARY, 201 OLIN LIBRARY CORNELL UNIVERSITY ITHACA, NY 14853, 26 May 2021 (2021-05-26), XP081969593**
• **ANGELOS MAVROGIANNIS ET AL: "B-GAP: Behavior-Guided Action Prediction for Autonomous Navigation", ARXIV.ORG, CORNELL UNIVERSITY LIBRARY, 201 OLIN LIBRARY CORNELL UNIVERSITY ITHACA, NY 14853, 7 November 2020 (2020-11-07), XP081808699**

**Description**

TECHNICAL FIELD

The present disclosure relates to a field of an artificial intelligence technology, in particular to fields of deep learning, automatic driving and intelligent transportation technologies, and may be applied to a model training, a trajectory prediction and other scenarios. And more specifically, the present disclosure relates to a method and an apparatus of training a model, and a method and an apparatus of predicting a trajectory.

BACKGROUND

Deep learning plays an increasingly prominent role in a field of automatic driving. Network model training is a core content of a deep learning technology. However, in some scenarios, the network model training has a low training efficiency and a poor training effect.

WO2021/058588A1 discloses a reinforcement learning method and system that selects actions to be performed by a reinforcement learning agent interacting with an environment. A causal model is implemented by a hindsight model neural network and trained using hindsight i.e. using future environment state trajectories. As the method and system does not have access to this future information when selecting an action, the hindsight model neural network is used to train a model neural network which is conditioned on data from current observations, which learns to predict an output of the hindsight model neural network.

KHADIJA SHAHEEN ET AL: "Continual Learning for Real-World Autonomous Systems: Algorithms, Challenges and Frameworks", ARXIV.ORG, CORNELL UNIVERSITY LIBRARY, 201 OLIN LIBRARY CORNELL UNIVERSITY ITHACA, NY 14853, 26 May 2021, discloses that continual learning is essential for all real-world applications, as frozen pre-trained models cannot effectively deal with non-stationary data distributions. The purpose of this study is to review the state-of-the-art methods that allow continuous learning of computational models over time. We primarily focus on the learning algorithms that perform continuous learning in an online fashion from considerably large (or infinite) sequential data and require substantially low computational and memory resources. We critically analyze the key challenges associated with continual learning lor autonomous real-world systems and compare current methods in terms of computations, memory, and network/model complexity. We also brielly describe the implementations of continuous learning algorithms under three main autonomous systems, i.e. , sell-driving vehicles, unmanned aerial vehicles, and robotics. The learning methods of these autonomous systems and their strengths and limitations are extensively explored in this article.

SUMMARY

The invention is set out in the appended set of claims. The present disclosure provides a method and an apparatus of training a model, a method and an apparatus of predicting a trajectory, a device, a medium, a product and an autonomous vehicle.

It should be understood that content described in this section is not intended to identify key or important features in embodiments of the present disclosure, nor is it intended to limit the scope of the present disclosure. Other features of the present disclosure will be easily understood through the following description.

BRIEF DESCRIPTION of the DRAWINGS

The accompanying drawings are used for better understanding of the solution and do not constitute a limitation to the present disclosure, wherein:

FIG. 1 schematically shows a system architecture of a method and an apparatus of training a model according to an embodiment of the present disclosure;

FIG. 2 schematically shows a flowchart of a method of training a model according to an embodiment of the present disclosure;

FIG. 3 schematically shows a flowchart of a method of training a model according to another embodiment of the present disclosure;

FIG. 4 schematically shows a process of training a model according to an embodiment of the present disclosure;

FIG. 5 schematically shows a flowchart of a method of predicting a trajectory according to an embodiment of the present disclosure;

FIG. 6 schematically shows a block diagram of an apparatus of training a model according to an embodiment of the present disclosure;

FIG. 7 schematically shows a block diagram of an apparatus of predicting a trajectory according to an embodiment of the present disclosure; and

FIG. 8 schematically shows a block diagram of an electronic device for implementing a model training according to an embodiment of the present disclosure.

DETAILED DESCRIPTION OF EMBODIMENTS

Exemplary embodiments of the present disclosure will be described below with reference to the accompanying drawings, which include various details of embodiments of the present disclosure to facilitate understanding and should be considered as merely exemplary. Therefore, those of ordinary skilled in the art should realize that various changes and modifications may be made to the embodiments described herein without departing from the scope and spirit of the present disclosure. Likewise, for clarity and conciseness, descriptions of well-known functions and structures are omitted in the following description.

Terms used herein are only intended to describe specific embodiments and are not intended to limit the present disclosure. Terms "including", "containing", etc. used herein indicate the presence of the described features, steps, operations and/or components, but do not exclude the presence or addition of one or more other features, steps, operations and/or components.

All terms (including technical and scientific terms) used herein have meanings generally understood by those of ordinary skilled in the art, unless otherwise defined. It should be noted that the terms used herein should be interpreted as having the meaning consistent with the context of the present disclosure, and should not be interpreted in an idealized or overly rigid manner.

In a case that an expression similar to "at least one selected from A, B, or C" is used, the expression should generally be interpreted according to the meaning of the expression generally understood by those of ordinary skilled in the art (for example, "a system having at least one selected from A, B, or C" shall include, but is not limited to, a system having A alone, having B alone, having C alone, having A and B, having A and C, having B and C, and/or having A, B and C, etc.).

Embodiments of the present disclosure provide a method of training a model. The method includes: adjusting a model parameter of a to-be-trained model for an $n^{th}$ round according to a first action selection strategy, so as to obtain an intermediate network model, wherein n=1, ... N, and N is an integer greater than 1; performing, by using the intermediate network model, at least one trajectory prediction action indicated by the first action selection strategy, so as to obtain a trajectory prediction result, where the at least one trajectory prediction action is based on training sample data; determining a second action selection strategy according to the trajectory prediction result and the first action selection strategy; and adjusting the model parameter of the to-be-trained model for an $(n+1)^{th}$ round according to the second action selection strategy.

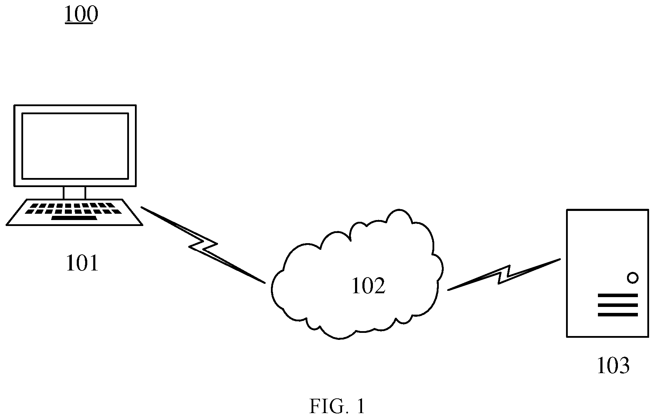

FIG. 1 schematically shows a system architecture of a method and an apparatus of training a model according to an embodiment of the present disclosure. It should be noted that FIG. 1 is only an example of the system architecture in which embodiments of the present disclosure may be applied, so as to help those of ordinary skilled in the art understand the technical content of the present disclosure, but it does not mean that embodiments of the present disclosure may not be applied to other devices, systems, environments or scenarios.

A system architecture 100 according to the embodiment may include a requesting terminal 101, a network 102, and a server 103. The network 102 is used to provide a medium of a communication link between the requesting terminal 101 and the server 103. The network 102 may include various connection types, such as wired, wireless communication links, an optical fiber cable, etc. The server 103 may be an independent physical server, or a server cluster composed of a plurality of physical servers or distributed system, or a cloud server that provides basic cloud computing services, such as a cloud service, a cloud computing, a network service, a middleware service, etc.

The requesting terminal 101 interacts with the server 103 through the network 102 to receive or send data, etc. For example, the requesting terminal 101 is used to send a request of training a model to the server 103. For example, the requesting terminal 101 is also used to provide the server 103 with training sample data for model training.

The server 103 may be a server that provides various services, such as a background processing server (for example only) that performs the model training according to the training sample data provided by the request terminal 101.

For example, the server 103 is used to adjust a model parameter of a to-be-trained model for an $n^{th}$ round according to a first action selection strategy after receiving the model training request from the request terminal 101, so as to obtain an intermediate network model, where n=1, ... N, and N is an integer greater than 1. The server 103 is also used to perform at least one trajectory prediction action based on training sample data indicated by the first action selection strategy by using the intermediate network model, so as to obtain a trajectory prediction result, determine a second action selection strategy according to the trajectory prediction result and the first action selection strategy, and adjust the model parameter of the to-be-trained model for an $(n+1)^{th}$ round according to the second action selection strategy.

It should be noted that the method of training the model provided in embodiments of the present disclosure may be performed by the server 103. Accordingly, the apparatus of training the model provided in embodiments of the present disclosure may be provided in the server 103. The method of training the model provided in embodiments of the present disclosure may also be performed by a server or server cluster that is different from the server 103 and capable of communicating with the request terminal 101 and/or the server 103. Accordingly, the apparatus of training the model provided in embodiments of the present disclosure may also be provided in the server or server cluster that is different from the server 103 and capable of communicating with the request terminal 101 and/or the server 103.

It should be understood that the number of requesting terminal, network and server shown in FIG.

1 is only schematic. According to implementation needs, there may be any number of request terminals, networks and servers.

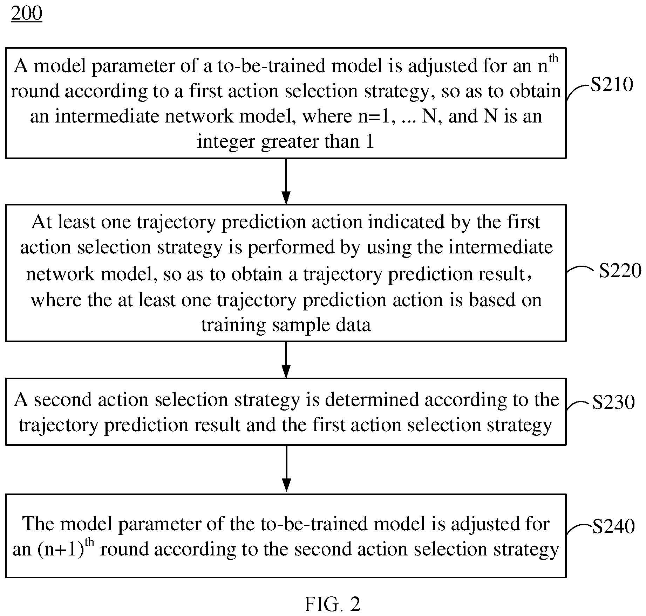

Embodiments of the present disclosure provide a method of training a model. The method of training the model according to an exemplary embodiment of the present disclosure will be descried with reference to FIG. 2 to FIG. 4 in combination with the system architecture of FIG. 1. The method of training the model according to embodiments of the present disclosure may be performed by the server 103 shown in FIG. 1, for example.

FIG. 2 schematically shows a flowchart of a method of training a model according to an embodiment of the present invention.

As shown in FIG. 2, a method 200 of training a model according to embodiments of the present disclosure may include operations S210 to S240, for example.

In operation S210, a model parameter of a to-be-trained model is adjusted for an $n^{th}$ round according to a first action selection strategy, so as to obtain an intermediate network model, where n=1, ... N, and N is an integer greater than 1.

In operation S220, at least one trajectory prediction action indicated by the first action selection strategy is performed by using the intermediate network model, so as to obtain a trajectory prediction result, where the at least one trajectory prediction action is based on training sample data.

In operation S230, a second action selection strategy is determined according to the trajectory prediction result and the first action selection strategy.

In operation S240, the model parameter of the to-be-trained model is adjusted for an $(n+1)^{th}$ round according to the second action selection strategy.

The following examples will illustrate an example flow of operations in the method of training the model of the embodiment.

In the claimed embodiments of the invention, during the $n^{th}$ round of training for the to-be-trained model, x candidate operation modules are selected from a candidate operation module pool based on the first action selection strategy, where x is an integer greater than 0. For example, the candidate operation modules may include a feature fusion module of a road spatial information, an extraction module of an obstacle temporal interaction information, an extraction module of an obstacle spatial interaction information, a feature fusion module of an obstacle and a road information, etc.

The x candidate operation modules include a candidate operation module that is repeatedly selected. The first action selection strategy may indicate a category of an operation module, a number of operation module, a connection order of operation modules, a weight of an operation module and other information associated with the x candidate operation module. For example, the first action selection strategy may be generated by a strategy model, and the strategy model may be a Transformer model or temporal model based on a reinforcement learning algorithm. The temporal model may include an RNN (Recurrent Neural Network), a LSTM (Long Short-Term Memory), etc. For example, the reinforcement learning algorithm may be implemented by using a Deep Q-learning algorithm.

The model parameter of the to-be-trained model is adjusted based on the selected x candidate operation module, so as to obtain an intermediate network model for implementing a function of the x candidate operation module. The intermediate network model may perform the at least one trajectory prediction action based on training sample data indicated by the first action selection strategy, so as to obtain the trajectory prediction result. In other words, the intermediate network model may perform the at least one trajectory prediction action corresponding to the x candidate operation module to obtain the trajectory prediction result.

For example, the at least one trajectory prediction action may include at least one selected from: for a target obstacle in at least one obstacle, determining a temporal interaction feature for the target obstacle; determining a spatial interaction feature between the target obstacle and another obstacle; or determining an environmental interaction feature between the target obstacle and a traveling environment. The target obstacle includes any of the at least one obstacle, and the another obstacle includes an obstacle in the at least one obstacle other than the target obstacle.

The at least one trajectory prediction action based on training sample data indicated by the first action selection strategy is performed by using the intermediate network model, so as to obtain the trajectory prediction result. Based on the trajectory prediction result, the first action selection strategy used to guide the model training is reversely adjusted to obtain the second action selection strategy, which may effectively improve an efficiency of the model training and effectively ensure an effect of the model training.

A single trajectory prediction action may correspond to at least one candidate operation module, and a single candidate operation module may also correspond to at least one trajectory prediction action. An arbitrary mapping relationship exists between the trajectory prediction action and the candidate operation module.

The single candidate operation module may include a plurality of candidate operation sub modules. In an example, the extraction module of the obstacle spatial interaction information may include a location feature extraction sub module, a location feature pooling sub module, a location feature concatenating sub module, a location feature weighting sub module, etc. When the single candidate operation module includes a plurality of candidate operation sub modules, the intermediate network model may perform at least one model prediction sub action corresponding to the plurality of candidate operation sub modules.

The second action selection strategy is determined according to the first action selection strategy and the trajectory prediction result output by the intermediate network model. In an example, a reward function value for the first action selection strategy may be determined according to the trajectory prediction result and an obstacle trajectory label indicated by verification sample data. The second action selection strategy is determined according to the reward function value and the first action selection strategy.

The model parameter of the to-be-trained model is adjusted for the $(n+1)^{th}$ round according to the second action selection strategy. In an example, y candidate operation module may be selected from the candidate operation module pool according to the second action selection strategy, where y is an integer greater than 0. The model parameter of the to-be-trained model is adjusted based on the selected y candidate operation module, so as to obtain the intermediate network model for implementing a function of the y candidate operation module.

In an example, the action selection strategy may be iteratively optimized with a training objective of maximizing the reward function value. At least one candidate operation module is selected according to the iteratively optimized action selection strategy. The model parameter of the to-be-trained model is adjusted according to the at least one candidate operation module selected, so as to obtain a trained neural network model. A trajectory prediction model is obtained based on the trained neural network model.

Through embodiments of the present disclosure, according to the first action selection strategy, the model parameter of the to-be-trained model is adjusted for the $n^{th}$ round to obtain the intermediate network model, where n=1, ... N, and N is an integer greater than 1. The at least one trajectory prediction action based on training sample data indicated by the first action selection strategy is performed by using the intermediate network model, so as to obtain the trajectory prediction result. The second action selection strategy is determined according to the trajectory prediction result and the first action selection strategy, and the model parameter of the to-be-trained model is adjusted for the $(n+1)^{th}$ round according to the second action selection strategy.

The at least one trajectory prediction action indicated by the first action selection strategy is performed by using the intermediate network model, so as to obtain the trajectory prediction result, and the second action selection strategy used to guide the model training is determined based on the trajectory prediction result and the first action selection strategy. An efficiency of the model training may be effectively improved, an accuracy of the model training may be effectively ensured, a dependence of the model training on expert data may be effectively reduced, a neural network model suitable for an unmanned driving scenario may be automatically generated, a time cost of a manual design in a process of the model training may be effectively reduced, and a reliable decision support may be provided for a driving assistant control.

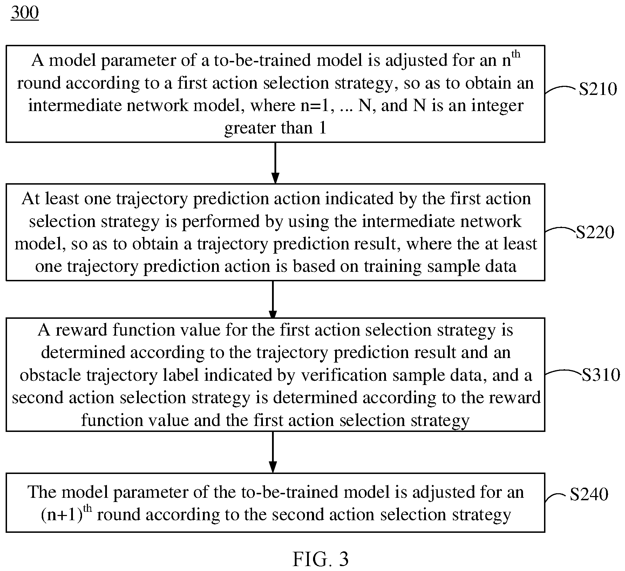

FIG. 3 schematically shows a flowchart of a method of training a model according to another embodiment of the present disclosure.

As shown in FIG. 3, a method 300 of training a model according to embodiments of the present invention includes operations S210 to S220, S310 and S240, for example.

In operation S210, a model parameter of a to-be-trained model is adjusted for an $n^{th}$ round according to a first action selection strategy, so as to obtain an intermediate network model, where n=1, ... N, and N is an integer greater than 1.

In operation S220, at least one trajectory prediction action based on training sample data indicated by the first action selection strategy is performed by using the intermediate network model, so as to obtain a trajectory prediction result.

In operation S310, a reward function value for the first action selection strategy is determined according to the trajectory prediction result and an obstacle trajectory label indicated by verification sample data, and a second action selection strategy is determined according to the reward function value and the first action selection strategy.

In operation S240, the model parameter of the to-be-trained model is adjusted for an $(n+1)^{th}$ round according to the second action selection strategy.

The following examples will illustrate an example flow of operations in the method of training the model of the embodiment.

In an example, at least one candidate operation module associated with the to-be-trained model may be determined according to the first action selection strategy. The model parameter of the to-be-trained model is adjusted for the $n^{th}$ round according to the at least one candidate operation module, so as to obtain the intermediate network model, where n=1, ... N, and N is an integer greater than 1.

At least one trajectory prediction action based on the training sample data indicated by the first action selection strategy is performed by using the intermediate network model, so as to obtain the trajectory prediction result. In other words, at least one trajectory prediction action based on the training sample data corresponding to the at least one candidate operation module is performed by using the intermediate network model, so as to obtain the trajectory prediction result.

The at least one trajectory prediction action may include, for example, determining a temporal interaction feature for the target obstacle, determining a spatial interaction feature between the target obstacle and another obstacle, determining an environmental interaction feature between the target obstacle and a traveling environment, and determining an obstacle type of the target obstacle, etc. The target obstacle includes any of the at least one obstacle, and the another obstacle includes an obstacle in the at least one obstacle other than the target obstacle.

In an example, in response to the at least one trajectory prediction action including determining the temporal interaction feature, the temporal interaction feature for the target obstacle is determined according to a location information of the target obstacle indicated by the training sample data, where the location information of the target obstacle is based on at least one historical time instant. The temporal interaction feature may indicate a location association relationship associated with the target obstacle based on at least one historical time instant.

A location feature of the target obstacle based on at least one historical time instant may be determined according to the location information of the target obstacle based on at least one historical time instant. The location feature of the target obstacle based on at least one historical time instant may be pooled to obtain the temporal interaction feature for the target obstacle.

In an example, the extraction module of the obstacle temporal interaction information may be selected from the candidate operation module pool based on the first action selection strategy. The extraction module of the obstacle temporal interaction information may be deployed in the to-be-trained model to perform a trajectory prediction action that determines the temporal interaction feature. The extraction module of the obstacle temporal interaction information may include, for example, a location feature extraction sub module, a pooling sub module, etc.

After the temporal interaction feature for the target obstacle is determined, an obstacle trajectory prediction may be performed based on the temporal interaction feature by using the intermediate network model, so as to obtain the trajectory prediction result. The trajectory prediction action that determines the temporal interaction feature indicated by the first action selection strategy may be performed by using the intermediate network model, so as to obtain the trajectory prediction result, which may effectively ensure an effect of the model training and effectively improve an accuracy of the obstacle trajectory prediction.

In another example, in response to the at least one trajectory prediction action including determining the spatial interaction feature, a spatial interaction sub feature based on each historical time instant between the target obstacle and another obstacle may be determined according to a location information of each obstacle indicated by the training sample data, where the location information of each obstacle is based on at least one historical time instant. According to a preset first attention matrix, the spatial interaction feature is obtained by performing weighting on the spatial interaction sub feature based on each historical time instant.

In an example, a location feature of each obstacle based on at least one historical time instant may be determined according to the location information of each obstacle based on at least one historical time instant. The location feature of each obstacle based on at least one historical time instant may be pooled to obtain the spatial interaction sub feature based on each historical time instant between the target obstacle and the another obstacle.

A spatial interaction sub feature matrix may be obtained by performing concatenating on the spatial interaction sub feature based on each historical time instant. The attention weighting is performed on the spatial interaction sub feature matrix according to the preset first attention matrix, so as to obtain the spatial interaction feature between the target obstacle and the another obstacle. For example, the first attention matrix may be determined by an attention network according to a historical spatial interaction sub feature between obstacles.

In an example, the extraction module of the obstacle spatial interaction information may be selected from the candidate operation module pool based on the first action selection strategy. The extraction module of the obstacle spatial interaction information may be deployed in the to-be-trained model to perform the trajectory prediction action that determines the spatial interaction feature. The extraction module of the obstacle spatial interaction information may include, for example, a location feature extraction sub module, a pooling sub module, a feature concatenating sub module, an attention network sub module, etc.

After the spatial interaction feature between the target obstacle and another obstacle is determined, the obstacle trajectory prediction may be performed based on the spatial interaction feature by using the intermediate network model, so as to obtain the trajectory prediction result. The trajectory prediction action that determines the spatial interaction feature indicated by the first action selection strategy may be performed by using the intermediate network model, so as to obtain the trajectory prediction result, which may be conducive to providing a prediction result that meets upstream and downstream functions/needs as required in a complex scenario, and automatically generating a neural network model suitable for an unmanned driving scenario.

The training sample data indicates the location information of the target obstacle that is based on at least one historical time instant and a road information of a traveling environment. In another example, in response to the at least one trajectory prediction action including determining the environmental interaction feature, at least one trajectory vector for the target obstacle is determined according to the location information of the target obstacle that is based on at least one historical time instant. At least one road vector is determined according to the road information of the traveling environment. The environmental interaction feature associated with the target obstacle is determined according to the at least one trajectory vector and the at least one road vector.

In an example, a moving trajectory of the target obstacle is sampled at equal time intervals according to the location information of the target obstacle based on at least one historical time instant, so as to obtain at least one trajectory vector. A target road indicated by the road information is segmented to obtain at least one road vector. For each of the at least one trajectory vector, the trajectory vector and a road vector meeting a preset distance threshold value condition with the trajectory vector are connected, so as to generate an adjacency matrix. An interaction information extraction is performed based on the adjacency matrix, so as to obtain the environmental interaction feature associated with the target obstacle.

For example, the at least one trajectory vector is connected by using a graph convolution neural network, and each trajectory vector is connected to the road vector meeting the preset distance threshold value condition with the corresponding trajectory vector, so as to generate the adjacency matrix. The interaction information extraction is performed based on the adjacency matrix according to a preset second attention matrix, so as to obtain the environmental interaction feature associated with the target obstacle. For example, the interaction information extraction is performed through a self-attention neural network module based on the at least one trajectory vector, the at least one road vector and the adjacency matrix that are input, so as to obtain the environmental interaction feature associated with the target obstacle.

In an example, the feature fusion module of the obstacle and the road information may be selected from the candidate operation module pool based on the first action selection strategy. The feature fusion module of the obstacle and the road information may be deployed in the to-be-trained model to perform the trajectory prediction action that determines the environmental interaction feature. The feature fusion module of the obstacle and the road information may include, for example, a trajectory vector/road vector generation sub module, an adjacency matrix generation sub module, an interactive information extraction sub module, etc.

After the environmental interaction feature associated with the target obstacle is determined, the obstacle trajectory prediction may be performed based on the environmental interaction feature by using the intermediate network model, so as to obtain the trajectory prediction result. The trajectory prediction action that determines the environmental interaction feature indicated by the first action selection strategy may be performed by using the intermediate network model, so as to obtain the trajectory prediction result, which may effectively reduce a dependence of the model training on a manual design and expert data, and may be conducive to effectively improving an efficiency of the model training and effectively ensuring the effect of the model training.

The obstacle trajectory prediction may be performed based on at least some of the temporal interaction feature, the spatial interaction feature and the environment interaction feature, so as to obtain the trajectory prediction result. The at least some of the temporal interaction feature, the spatial interaction feature and the environment interaction feature may be obtained by the x candidate operation modules performing corresponding trajectory prediction actions.

The first action selection strategy may indicate a category of an operation module, a number of operation module, a connection order of operation modules, a weight of an operation module and other information associated with the x candidate operation module. Therefore, the first action selection strategy may also indicate a feature category, a feature weight, a feature coupling relationship and other information associated with each interaction feature. For example, the intermediate network model may be a neural network model that uses a recurrent neural network as a hidden layer. An input of the hidden layer in the recurrent neural network may include an output of an input layer and an output of a previous hidden layer. Nodes in the hidden layer may be self-connected or interconnected.

The second action selection strategy is determined according to the first action selection strategy and the trajectory prediction result output by the intermediate network model. In an example, a reward function value for the first action selection strategy may be determined according to the trajectory prediction result and the obstacle trajectory label indicated by the verification sample data. The second action selection strategy is determined according to the reward function value and the first action selection strategy.

The training sample data include obstacle state data and traveling environment data based on a specified time period. By using the training sample data as input data, an obstacle trajectory based on at least one target time instant after the specified time period is predicted by using the intermediate network model, so as to obtain the trajectory prediction result. The verification sample data indicates an obstacle real trajectory associated with at least one target time instant, and the obstacle real trajectory indicated by the verification sample data is used as the obstacle trajectory label. The reward function value for the first action selection strategy is determined according to a difference between the trajectory prediction result and the obstacle trajectory label.

The reward function value may be configured as any value that may indicate a training progress, such as an accuracy of a verification set, a difference between loss function values before and after a model update in adjacent training rounds, etc. In an example, a matching degree between an obstacle predicted trajectory and the obstacle real trajectory may be used as the reward function value for the first action selection strategy. In addition, the reward function value may be mapped to the matching degree. The reward function value *Reward* may be expressed as:

$$Reward = \begin{cases} -1.0, & 0 \leq Matg < M1 \\ Matg, & M1 \leq Matg < M2, \\ 1.0, & Matg \geq M2 \end{cases}$$

where Matg represents a matching degree between the obstacle predicted trajectory and the obstacle real trajectory, M1 represents a threshold value of a first matching degree, and M2 represents a threshold value of a second matching degree.

The first action selection strategy includes a control parameter for at least one trajectory prediction action. For example, the control parameter for the at least one trajectory prediction action is used to control an action category, an action content, an action weight, an action execution order, an action execution frequency, an action coupling relationship and other information associated with the trajectory prediction action. The second action selection strategy may be obtained by adjusting the control parameter for the at least one trajectory prediction action in the first action selection strategy according to the reward function value.

In an example, in response to the reward function value being greater than a preset reward threshold value, the control parameter in the first action selection strategy is adjusted according to the reward function value, so as to obtain the second action selection strategy. A selection probability of the trajectory prediction action may be determined according to the reward function value, and the selection probability is positively correlated with the reward function value. The control parameter in the first action selection strategy is adjusted based on the selection probability, so as to obtain the second action selection strategy.

In response to the reward function value being less than or equal to the preset reward threshold value or an adjustment round for the model parameter of the to-be-trained model being less than the preset round threshold value, an action selection strategy is randomly selected as the second action selection strategy. In an example, the second action selection strategy may be determined by using an ε-greedy algorithm. The ε-greedy algorithm is a commonly used greedy strategy algorithm, which may be used to balance an action selection tendency in reinforcement learning, ε may be an integer less than 1. An ε probability is used to randomly select the action selection strategy, and a 1-ε probability is used to select the existing action selection strategy with the maximum reward function value.

The second action selection strategy used to guide the model training is determined based on the reward function value and the first action selection strategy, which may effectively reduce a calculation cost of the model training, effectively improve a utilization of training sample data, effectively improve the efficiency of the model training, and effectively ensure the effect of the model training.

The model parameter of the to-be-trained model is adjusted for the (n+1)th round according to the second action selection strategy. The model parameter of the to-be-trained model may be adjusted iteratively by rounds until a preset training termination condition is reached. For example, the training termination condition may include that iterative rounds reach the preset round threshold value, the reward function value for the action selection strategy reaches a convergence, and the reward function value for the action selection strategy meets a preset reward function threshold value. After the training termination condition is reached, the trajectory prediction model may be obtained based on the trained neural network model.

The reward function value for the first action selection strategy is determined according to the trajectory prediction result, and the second action selection strategy used to guide the model training is determined according to the reward function value and the first action selection strategy. The action selection strategy may be adaptively determined based on a model training target by providing a heuristic strategy for a determination of the second action selection strategy, which may effectively reduce the dependence of the model training on the manual design and expert data, effectively improve the utilization of the training sample data, and effectively improve the efficiency of the model training. Therefore, a calculation resource consumption of the model training may be reduced, the effect of the model training may be effectively ensured through an accumulation of external rewards, an accuracy of the obstacle trajectory prediction may be improved, and a reliable decision support may be provided for a driving assistant control.

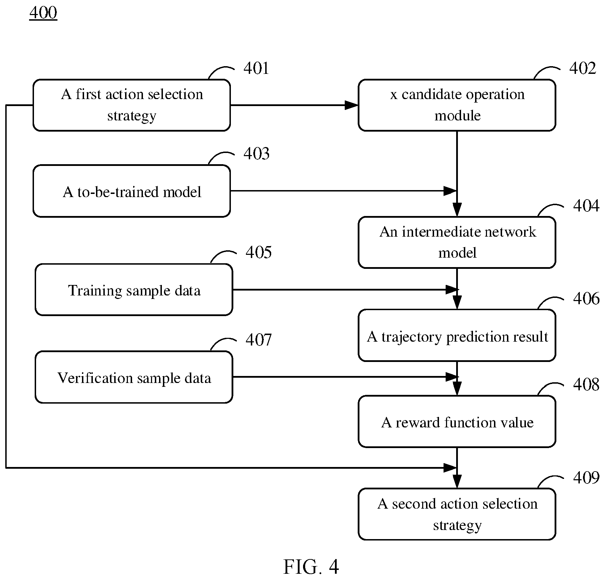

FIG. 4 schematically shows a process of training a model according to an embodiment of the present invention.

As shown in FIG. 4, in a process 400 of training a model, x candidate operation module 402 is selected from the candidate operation module pool according to a first action selection strategy 401, where x is an integer greater than 0. A model parameter of a to-be-trained model 403 is adjusted for an nth round based on the selected x candidate operation module 402, so as to obtain an intermediate network model 404 for implementing a function of the x candidate operation module 402.

At least one trajectory prediction action based on training sample data 405 indicated by the first action selection strategy 401 is performed by using the intermediate network model 404, so as to obtain a trajectory prediction result 406. A reward function value 408 for the first action selection strategy 401 is determined according to the trajectory prediction result 406 and an obstacle trajectory label indicated by verification sample data 407. A second action selection strategy 409 used to guide a model parameter adjustment of the (n+1)th round is determined according to the reward function value 408 and the first action selection strategy 401.

The second action selection strategy used to guide the model training is determined according to the reward function value and the first action selection strategy, which may effectively improve a speed of the model training and effectively ensure a generalization performance of a trained model. A dependence of the model training on expert data and a manual design may be reduced, a neural network model suitable for an unmanned driving scenario may be automatically generated, and a reliable decision support may be provided for a driving assistant control.

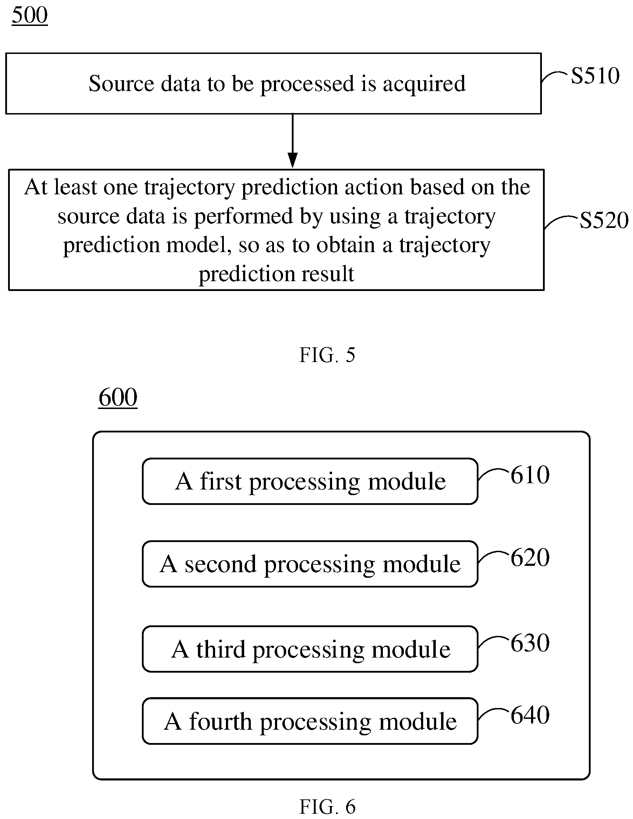

FIG. 5 schematically shows a flowchart of a method of predicting a trajectory according to an embodiment of the present disclosure.

As shown in FIG. 5, a method 500 of predicting a trajectory according to embodiments of the present disclosure may include operations S510 to S520, for example.

In operation S510, source data to be processed is acquired.

In operation S520, at least one trajectory prediction action based on the source data is performed by using a trajectory prediction model, so as to obtain a trajectory prediction result.

In an example, the source data to be processed may include, for example, motion state data and traveling environment data of at least one obstacle. By using the source data to be processed as input data of the trajectory prediction model, the at least one trajectory prediction action based on the source data is performed by using the trajectory prediction model, so as to obtain the trajectory prediction result associated with a target obstacle.

The at least one trajectory prediction action may include, for example, at least one selected from: for a target obstacle in at least one obstacle, determining a temporal interaction feature for the target obstacle, determining a spatial interaction feature between the target obstacle and other obstacle, and determining an environmental interaction feature between the target obstacle and a traveling environment. The target obstacle includes any of the at least one obstacle, and the other obstacle include an obstacle in the at least one obstacle other than the target obstacle.

A prediction accuracy of an obstacle trajectory may be effectively ensured, a reliable data support may be provided for a driving assistant control and a safe driving of an unmanned vehicle may be ensured.

FIG. 6 schematically shows a block diagram of an apparatus of training a model according to an embodiment of the present disclosure.

As shown in FIG. 6, an apparatus 600 of training a model according to embodiments of the present disclosure includes, for example, a first processing module 610, a second processing module 620, a third processing module 630, and a fourth processing module 640.

The first processing module 610 is used to adjust a model parameter of a to-be-trained model for an $n^{th}$ round according to a first action selection strategy, so as to obtain an intermediate network model, where n=1, ... N, and N is an integer greater than 1; the second processing module 620 is used to perform, by using the intermediate network model, at least one trajectory prediction action indicated by the first action selection strategy, so as to obtain a trajectory prediction result, where the at least one trajectory prediction action is based on training sample data; the third processing module 630 is used to determine a second action selection strategy according to the trajectory prediction result and the first action selection strategy; and the fourth processing module 640 is used to adjust the model parameter of the to-be-trained model for an $(n+1)^{th}$ round according to the second action selection strategy.

Through embodiments of the present disclosure, the model parameter of the to-be-trained model is adjusted for the $n^{th}$ round according to the first action selection strategy, so as to obtain the intermediate network model, where n=1, ... N, and N is an integer greater than 1. The at least one trajectory prediction action based on training sample data indicated by the first action selection strategy is performed by using the intermediate network model, so as to obtain the trajectory prediction result. The second action selection strategy is determined according to the trajectory prediction result and the first action selection strategy. The model parameter of the to-be-trained model is adjusted for the $(n+1)^{th}$ round according to the second action selection strategy.

The at least one trajectory prediction action indicated by the first action selection strategy is performed by using the intermediate network model, so as to obtain the trajectory prediction result, and the second action selection strategy used to guide the model training is determined based on the trajectory prediction result and the first action selection strategy. An efficiency of the model training may be effectively improved, an accuracy of the model training may be effectively ensured, a dependence of the model training on expert data may be effectively reduced, a neural network model suitable for an unmanned driving scenario may be automatically generated, a time cost of a manual design in a process of the model training may be effectively reduced, and a reliable decision support may be provided for a driving assistant control.

According to embodiments of the present disclosure, the at least one trajectory prediction action includes at least one selected from: for a target obstacle in at least one obstacle, determining a temporal interaction feature for the target obstacle; determining a spatial interaction feature between the target obstacle and another obstacle; determining an environmental interaction feature between the target obstacle and a traveling environment. The target obstacle includes any of the at least one obstacle, and the another obstacle include an obstacle in the at least one obstacle other than the target obstacle.

According to embodiments of the present disclosure, the second processing module includes: a first processing sub module used to determine, in response to the at least one trajectory prediction action including determining the temporal interaction feature, the temporal interaction feature for the target obstacle according to a location information of the target obstacle indicated by the training sample data, where the location information of the target obstacle is based on at least one historical time instant; and a second processing sub module used to perform an obstacle trajectory prediction based on the temporal interaction feature, so as to obtain the trajectory prediction result.

According to embodiments of the present disclosure, the second processing module includes: a third processing sub module used to determine, in response to the at least one trajectory prediction action including determining the spatial interaction feature, an spatial interaction sub feature based on each historical time instant between the target obstacle and the another obstacle according to a location information of each obstacle indicated by the training sample data, and the location information of each obstacle is based on at least one historical time instant; a fourth sub module used to performing weighting on the spatial interaction sub feature based on each historical time instant according to a preset first attention matrix, so as to obtain the spatial interaction feature; and a fifth processing sub module used to perform an obstacle trajectory prediction based on the spatial interaction feature, so as to obtain the trajectory prediction result.

According to embodiments of the present disclosure, the training sample data indicates an location information of the target obstacle based at least one historical time instant and a road information of the traveling environment; and the second processing module includes: a sixth processing sub module used to determine, in response to the at least one trajectory prediction action including determining the environmental interaction feature, at least one trajectory vector for the target obstacle according to the location information of the target obstacle based at least one historical time instant; a seventh processing sub module used to determine at least one road vector according to the road information of the traveling environment; an eighth processing sub module used to determine the environment interaction feature associated with the target obstacle according to the at least one trajectory vector and the at least one road vector; and a ninth processing sub module used to perform an obstacle trajectory prediction based on the environmental interaction feature, so as to obtain the trajectory prediction result.

According to embodiments of the present disclosure, the eighth processing sub module includes: a first processing unit used to connect, for each of the at least one trajectory vector, the trajectory vector and a road vector meeting a preset distance threshold condition with the trajectory vector, so as to generate an adjacency matrix; and a second processing unit used to perform an interaction information extraction based on the adjacency matrix, so as to obtain the environment interaction feature associated with the target obstacle.

According to embodiments of the present disclosure, the third processing module includes: a tenth processing sub module used to determine a reward function value for the first action selection strategy according to the trajectory prediction result and an obstacle trajectory label indicated by verification sample data; and an eleventh processing sub module used to determine the second action selection strategy according to the reward function value and the first action selection strategy.

According to embodiments of the present disclosure, the first action selection strategy includes a control parameter for the at least one trajectory prediction action; and the eleventh processing sub module includes: a third processing unit used to adjust, in response to the reward function value being greater than a preset reward threshold value, the control parameter in the first action selection strategy according to the reward function value, so as to obtain the second action selection strategy.

According to embodiments of the present disclosure, the eleventh processing sub module further includes: a fourth processing unit used to randomly select, in response to the reward function value being less than or equal to the preset reward threshold or an adjustment round for the model parameter of the to-be-trained model being less than a preset round threshold value, an action selection strategy as the second action selection strategy.

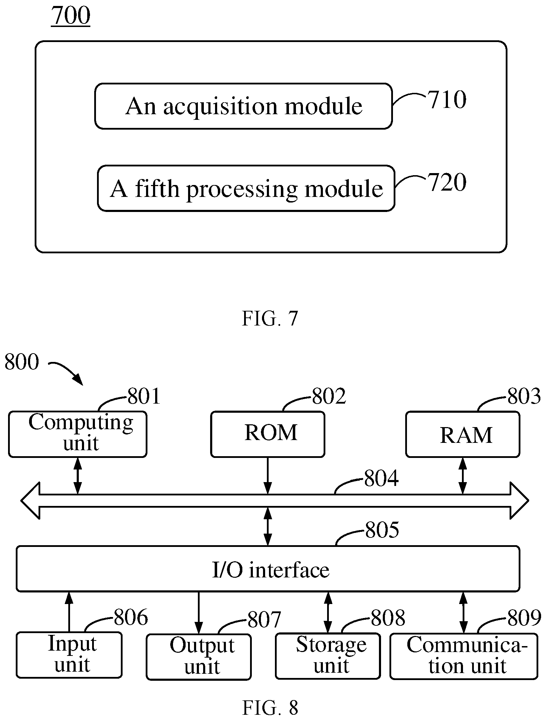

FIG. 7 schematically shows a block diagram of an apparatus of predicting a trajectory according to an embodiment of the present disclosure.

As shown in FIG. 7, an apparatus 700 of predicting a trajectory according to embodiments of the present disclosure includes, for example, an acquisition module 710 and a fifth processing module 720.

The acquisition module 710 is used to acquire source data to be processed; and the fifth processing module 720 is used to perform at least one trajectory prediction action based on the source data by using the trajectory prediction model, so as to obtain a trajectory prediction result, where the trajectory prediction model is generated by using the above-mentioned method of training the model.

A prediction accuracy of an obstacle trajectory may be effectively ensured, a reliable data support may be provided for a driving assistant control and a safe driving of an unmanned vehicle may be ensured.

It should be noted that in the technical solution of the present disclosure, an acquisition, a storage, a use, a processing, a transmission, a provision and a disclosure of information involved comply with provisions of relevant laws and regulations, and do not violate public order and good custom.

According to embodiments of the present disclosure, an electronic device is provided, including: at least one processor and a memory communicatively connected to the at least one processor. The memory stores instructions executable by the at least one processor, and the instructions, when executed by the at least one processor, are configured to cause the at least one processor to implement the above-mentioned method of training the model or the above-mentioned method of predicting the trajectory.

According to embodiments of the present disclosure, a non-transitory computer-readable storage medium having computer instructions therein is provided, and the computer instructions are configured to cause a computer system to implement the above-mentioned method of training the model or the above-mentioned method of predicting the trajectory.

According to embodiments of the present disclosure, a computer program product containing a computer program or instructions is provided, and the computer program or instructions, when executed by a processor, causes or cause the processor to implement the above-mentioned method of training the model or the above-mentioned method of predicting the trajectory.

According to embodiments of the present disclosure, an autonomous vehicle is further provided. The autonomous vehicle includes, for example, an electronic device, and the electronic device includes the at least one processor and the memory communicatively connected to the at least one processor. The memory stores the instructions executable by the at least one processor, and the instructions, when executed by the at least one processor, are configured to cause the at least one processor to implement the above-mentioned method of training the model or the above-mentioned method of predicting the trajectory. In an example, the electronic device according to embodiments of the present disclosure is similar to the electronic device shown in FIG. 8, for example.

FIG. 8 schematically shows a block diagram of an electronic device for implementing a method of training a model according to an embodiment of the present disclosure.

FIG. 8 shows a schematic block diagram of an exemplary electronic device 800 for implementing embodiments of the present disclosure. The electronic device 800 is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 8, the electronic device 800 includes a computing unit 801 which may perform various appropriate actions and processes according to a computer program stored in a read only memory (ROM) 802 or a computer program loaded from a storage unit 808 into a random access memory (RAM) 803. In the RAM 803, various programs and data necessary for an operation of the electronic device 800 may also be stored. The computing unit 801, the ROM 802 and the RAM 803 are connected to each other through a bus 804. An input/output (I/O) interface 805 is also connected to the bus 804.

A plurality of components in the electronic device 800 are connected to the I/O interface 805, including: an input unit 806, such as a keyboard, or a mouse; an output unit 807, such as displays or speakers of various types; a storage unit 808, such as a disk, or an optical disc; and a communication unit 809, such as a network card, a modem, or a wireless communication transceiver. The communication unit 809 allows the electronic device 800 to exchange information/data with other devices through a computer network such as Internet and/or various telecommunication networks.

The computing unit 801 may be various general-purpose and/or dedicated processing assemblies having processing and computing capabilities. Some examples of the computing units 801 include, but are not limited to, a central processing unit (CPU), a graphics processing unit (GPU), various dedicated artificial intelligence (AI) computing chips, various computing units that run deep learning model algorithms, a digital signal processing processor (DSP), and any suitable processor, controller, microcontroller, etc. The computing unit 801 executes various methods and steps described above, such as the method of training the model. For example, in some embodiments, the method of training the model may be implemented as a computer software program which is tangibly embodied in a machine-readable medium, such as the storage unit 808. In some embodiments, the computer program may be partially or entirely loaded and/or installed in the electronic device 800 via the ROM 802 and/or the communication unit 809. The computer program, when loaded in the RAM 803 and executed by the computing unit 801, may execute one or more steps in the method of training the model described above. Alternatively, in other embodiments, the computing unit 801 may be configured to perform the method of training the model by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable model training apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may include or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with an object, the systems and technologies described here may be implemented on a computer including a display device (for example, a CRT (cathode ray tube) or LCD (liquid crystal display) monitor) for displaying information to the object, and a keyboard and a pointing device (for example, a mouse or a trackball) through which the object may provide the input to the computer. Other types of devices may also be used to provide interaction with the object. For example, a feedback provided to the object may be any form of sensory feedback (for example, visual feedback, auditory feedback, or tactile feedback), and the input from the object may be received in any form (including acoustic input, voice input or tactile input).

The systems and technologies described herein may be implemented in a computing system including back-end components (for example, a data server), or a computing system including middleware components (for example, an application server), or a computing system including front-end components (for example, an object computer having a graphical object interface or web browser through which the object may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a server of a distributed system, or a server combined with a block-chain.

It should be understood that steps of the processes illustrated above may be reordered, added or deleted in various manners. For example, the steps described in the present disclosure may be performed in parallel, or sequentially as long as a desired result of the technical solution of the present disclosure may be achieved. This is not limited in the present disclosure.

The above-mentioned specific embodiments do not constitute a limitation on the scope of protection of the present disclosure. Those of ordinary skilled in the art should understand that various modifications, combinations, sub-combinations and substitutions may be made according to design requirements and other factors.

**Claims**

1. A computer-implemented method of training a model, wherein the model is used by an autonomous vehicle in an unmanned driving scenario, the method comprising:

   adjusting (S210) a model parameter of a to-be-trained model for an $n^{th}$ round according to a first action selection strategy, so as to obtain an intermediate network model, wherein n=1, ... N, and N is an integer greater than 1;
   performing (S220), by using the intermediate network model, at least one trajectory prediction action indicated by the first action selection strategy, so as to obtain a trajectory prediction result, wherein the at least one trajectory prediction action is based on training sample data;
   determining (S230) a second action selection strategy according to the trajectory prediction result and the first action selection strategy; and

adjusting (S240) the model parameter of the to-be-trained model for an $(n+1)^{th}$ round according to the second action selection strategy,
wherein the first action selection strategy comprises a control parameter for the at least one trajectory prediction action,
wherein the determining (S230) a second action selection strategy according to the trajectory prediction result and the first action selection strategy comprises:

determining (S310) a reward function value for the first action selection strategy according to the trajectory prediction result and an obstacle trajectory label indicated by verification sample data; and
adjusting, in response to the reward function value being greater than a preset reward threshold value, the control parameter in the first action selection strategy according to the reward function value, so as to obtain the second action selection strategy, wherein the verification sample data indicates an obstacle real trajectory associated with at least one target time instant, and the obstacle real trajectory indicated by the verification sample data is used as the obstacle trajectory label,
wherein the adjusting (S210) a model parameter of a to-be-trained model for an $n^{th}$ round according to a first action selection strategy, so as to obtain an intermediate network model, comprises:

selecting, from a candidate operation module pool, x candidate operation module according to the first action selection strategy, wherein x is an integer greater than 0; and
adjusting the model parameter of the to-be-trained model for the $n^{th}$ round based on the selected x candidate operation module, so as to obtain the intermediate network model for implementing a function of the x candidate operation module,
wherein the training sample data comprises obstacle state data and traveling environment data based on a specified time period, and wherein by using the training sample data as input data, an obstacle trajectory based on at least one target time instant after the specified time period is predicted by using the intermediate network model, so as to obtain the trajectory prediction result,
wherein the method further comprises:

adjusting the model parameter of the to-be-trained model iteratively by rounds until a preset training termination condition is reached; and
obtaining a trajectory prediction model based on the to-be-trained model obtained after the preset training termination condition is reached, wherein the trajectory prediction model is configured to generate a trajectory prediction result provided for a driving assistant control of the autonomous vehicle, wherein the at least one trajectory prediction action comprises at least one selected from: for a target obstacle in at least one obstacle, determining a temporal interaction feature for the target obstacle; determining a spatial interaction feature between the target obstacle and another obstacle; or determining an environmental interaction feature between the target obstacle and a traveling environment, wherein the target obstacle comprises any of the at least one obstacle, and the another obstacle comprises an obstacle in the at least one obstacle other than the target obstacle.

**2.** The method according to claim 1, wherein performing, by using the intermediate network model, the at least one trajectory prediction action based on the training sample data indicated by the first action selection strategy so as to obtain the trajectory prediction result comprises:

in response to the at least one trajectory prediction action comprising determining the temporal interaction feature,
determining the temporal interaction feature for the target obstacle, according to a location information of the target obstacle indicated by the training sample data, wherein the location information of the target obstacle is based on at least one historical time instant; and
performing an obstacle trajectory prediction based on the temporal interaction feature, so as to obtain the trajectory prediction result.

**3.** The method according to claim 1, wherein performing, by using the intermediate network model, the at least one trajectory prediction action based on the training sample data indicated by the first action selection strategy so as to obtain the trajectory prediction result comprises:

> in response to the at least one trajectory prediction action comprising determining the spatial interaction feature,
> determining a spatial interaction sub feature based on each historical time instant between the target obstacle and the another obstacle, according to a location information of each obstacle indicated by the training sample data, wherein the location information of each obstacle is based on at least one historical time instant;
> performing weighting on the spatial interaction sub feature based on each historical time instant according to a preset first attention matrix, so as to obtain the spatial interaction feature; and
> performing an obstacle trajectory prediction based on the spatial interaction feature, so as to obtain the trajectory prediction result.

4. The method according to claim 1, wherein

> the training sample data indicates a location information of the target obstacle based on at least one historical time instant and a road information of the traveling environment, and wherein performing, by using the intermediate network model, the at least one trajectory prediction action based on the training sample data indicated by the first action selection strategy so as to obtain the trajectory prediction result comprises:
>
> > in response to the at least one trajectory prediction action comprising determining the environmental interaction feature,
> > determining at least one trajectory vector for the target obstacle, according to the location information of the target obstacle based on at least one historical time instant;
> > determining at least one road vector according to the road information of the traveling environment;
> > determining the environment interaction feature associated with the target obstacle according to the at least one trajectory vector and the at least one road vector; and
> > performing an obstacle trajectory prediction based on the environmental interaction feature, so as to obtain the trajectory prediction result.

5. The method according to claim 4, wherein the determining the environment interaction feature associated with the target obstacle according to the at least one trajectory vector and the at least one road vector comprises:

> connecting, for each of the at least one trajectory vector, the trajectory vector and a road vector meeting a preset distance threshold value condition with the trajectory vector, so as to generate an adjacency matrix; and
> performing an interaction information extraction based on the adjacency matrix, so as to obtain the environment interaction feature associated with the target obstacle.

6. The method according to claim 1, further comprising:

> randomly selecting an action selection strategy as the second action selection strategy, in response to the reward function value being less than or equal to the preset reward threshold value or an adjustment round for the model parameter of the to-be-trained model being less than a preset round threshold value.

7. A computer-implemented method (500) of predicting a trajectory, wherein the method (500) is implemented by an autonomous vehicle in an unmanned driving scenario, the method comprising:

> acquiring (S510) source data to be processed; and
> performing (S520) at least one trajectory prediction action based on the source data by using a trajectory prediction model, so as to obtain a trajectory prediction result, wherein the trajectory prediction model is generated by using the method according to any one of claims 1 to 6.

8. An apparatus (600) of training a model, wherein the apparatus (600) is provided in an autonomous vehicle in an unmanned driving scenario, the apparatus (600) comprising:

> a first processing module (610) configured to adjust a model parameter of a to-be-trained model for an $n^{th}$ round according to a first action selection strategy, so as to obtain an intermediate network model, wherein n=1, ... N, and N is an integer greater than 1;
> a second processing module (620) configured to perform, by using the intermediate network model, at least one trajectory prediction action indicated by the first action selection strategy, so as to obtain a trajectory prediction result, wherein the at least one trajectory prediction action is based on training sample data;
> a third processing module (630) configured to determine a second action selection strategy according to the trajectory prediction result and the first action selection strategy; and
a fourth processing module (640) configured to adjust the model parameter of the to-be-trained model for an $(n+1)^{th}$ round according to the second action selection strategy,
wherein the first action selection strategy comprises a control parameter for the at least one trajectory prediction action,
wherein the third processing module (630) comprises:

a tenth processing sub module configured to determine a reward function value for the first action selection strategy according to the trajectory prediction result and an obstacle trajectory label indicated by verification sample data; and
a third processing unit configured to adjust, in response to the reward function value being greater than a preset reward threshold value, the control parameter in the first action selection strategy according to the reward function value, so as to obtain the second action selection strategy,
wherein the verification sample data indicates an obstacle real trajectory associated with at least one target time instant, and the obstacle real trajectory indicated by the verification sample data is used as the obstacle trajectory label,
wherein first processing module (610) is further configured to:

select, from a candidate operation module pool, x candidate operation module according to the first action selection strategy, wherein x is an integer greater than 0; and
adjust the model parameter of the to-be-trained model for the $n^{th}$ round based on the selected x candidate operation module, so as to obtain the intermediate network model for implementing a function of the x candidate operation module,
wherein the training sample data comprises obstacle state data and traveling environment data based on a specified time period, and wherein by using the training sample data as input data, an obstacle trajectory based on at least one target time instant after the specified time period is predicted by using the intermediate network model, so as to obtain the trajectory prediction result,
wherein the apparatus (600) further comprises a sixth processing module configured to:

adjust the model parameter of the to-be-trained model iteratively by rounds until a preset training termination condition is reached; and
obtain a trajectory prediction model based on the to-be-trained model obtained after the preset training termination condition is reached,
wherein the trajectory prediction model is configured to generate a trajectory prediction result provided for a driving assistant control of the autonomous vehicle
wherein the at least one trajectory prediction action comprises at least one selected from: for a target obstacle in at least one obstacle, determining a temporal interaction feature for the target obstacle;
determining a spatial interaction feature between the target obstacle and another obstacle;
determining an environmental interaction feature between the target obstacle and a traveling environment,
wherein the target obstacle comprises any of the at least one obstacle, and the another obstacle comprises an obstacle in the at least one obstacle other than the target obstacle.

9. The apparatus (600) according to claim 8, wherein the second processing module (620) comprises:

a first processing sub module configured to determine, in response to the at least one trajectory prediction action comprising determining the temporal interaction feature, the temporal interaction feature for the target obstacle according to a location information of the target obstacle indicated by the training sample data, wherein the location information of the target obstacle is based on at least one historical time instant; and
a second processing sub module configured to perform an obstacle trajectory prediction based on the temporal interaction feature, so as to obtain the trajectory prediction result.

10. The apparatus (600) according to claim 8, wherein the second processing module (620) comprises:

a third processing sub module configured to determine, in response to the at least one trajectory prediction action comprising determining the spatial interaction feature, a spatial interaction sub feature based on each historical time instant between the target obstacle and the another obstacle according to a location information of each obstacle indicated by the training sample data, wherein the location information of each obstacle is based on at least one historical time instant;
a fourth processing sub module configured to perform weighting on the spatial interaction sub feature based on each historical time instant according to a preset first attention matrix, so as to obtain the spatial interaction feature; and
a fifth processing sub module configured to perform an obstacle trajectory prediction based on the spatial interaction feature, so as to obtain the trajectory prediction result.

11. An apparatus (700) of predicting a trajectory, wherein the apparatus (700) is provided in an autonomous vehicle in an unmanned driving scenario, the apparatus (700) further comprising:

an acquisition module (710) configured to acquire source data to be processed; and
a fifth processing module (720) configured to perform at least one trajectory prediction action based on the source data by using the trajectory prediction model, so as to obtain a trajectory prediction result, wherein the trajectory prediction model is generated by the apparatus according to any one of claims 8 to 10.

**Patentansprüche**

1. Computerimplementiertes Verfahren zum Trainieren eines Modells, wobei das Modell von einem autonomen Fahrzeug in einem unbemannten Fahrszenario verwendet wird,
wobei das Verfahren folgende Schritte aufweist:

Anpassen (S210) eines Modellparameters eines zu trainierenden Modells für eine n-te Runde gemäß einer ersten Aktionsauswahlstrategie, um ein Zwischennetzwerkmodell zu erhalten, wobei n=1, ..., N und N eine ganze Zahl größer als 1 ist;
Durchführen (S220), unter Verwendung des Zwischennetzwerkmodells, zumindest einer Trajektorienvorhersageaktion, die durch die erste Aktionsauswahlstrategie angezeigt wird, um ein Trajektorienvorhersageergebnis zu erhalten, wobei die zumindest eine Trajektorienvorhersageaktion auf Trainingsmusterdaten basiert;
Bestimmen (S230) einer zweiten Aktionsauswahlstrategie gemäß dem Trajektorienvorhersageergebnis und der ersten Aktionsauswahlstrategie; und

Anpassen (S240) des Modellparameters des zu trainierenden Modells für eine (n+1)-te Runde gemäß der zweiten Aktionsauswahlstrategie,
wobei die erste Aktionsauswahlstrategie einen Steuerparameter für die zumindest eine Trajektorienvorhersageaktion aufweist,
wobei das Bestimmen (S230) einer zweiten Aktionsauswahlstrategie gemäß dem Trajektorienvorhersageergebnis und der ersten Aktionsauswahlstrategie folgende Schritte aufweist:

Bestimmen (S310) eines Belohnungsfunktionswerts für die erste Aktionsauswahlstrategie gemäß dem Trajektorienvorhersageergebnis und einer Hindernistrajektorienkennzeichnung, die durch Verifizierungsmusterdaten angezeigt wird; und
Anpassen, als Reaktion darauf, dass der Belohnungsfunktionswert größer als ein voreingestellter Belohnungsschwellenwert ist, des Steuerparameters in der ersten Aktionsauswahlstrategie gemäß dem Belohnungsfunktionswert, um die zweite Aktionsauswahlstrategie zu erhalten,
wobei die Verifizierungsmusterdaten eine reale Hindernistrajektorie anzeigen, die dem zumindest einen Zielzeitpunkt zugeordnet ist, und die reale Hindernistrajektorie, die durch die Verifizierungsmusterdaten angezeigt wird, als die Hindernistrajektorienkennzeichnung verwendet wird,
wobei das Anpassen (S210) eines Modellparameters eines zu trainierenden Modells für eine n-te Runde gemäß einer ersten Aktionsauswahlstrategie, um ein Zwischennetzwerkmodell zu erhalten, folgende Schritte aufweist:

Auswählen, aus einem Kandidatenoperationsmodulpool, von x Kandidatenoperationsmodulen gemäß der ersten Aktionsauswahlstrategie, wobei x eine ganze Zahl größer als 0 ist; und
Anpassen des Modellparameters des zu trainierenden Modells für die n-te Runde basierend auf den ausgewählten x Kandidatenoperationsmodulen, um das Zwischennetzwerkmodell zu erhalten, zum Implementieren einer Funktion der x Kandidatenoperationsmodule,
wobei die Trainingsmusterdaten Hinderniszustandsdaten und Reiseumgebungsdaten basierend auf einer spezifizierten Zeitperiode aufweisen, und wobei unter Verwendung der Trainingsmusterdaten als Eingabedaten eine Hindernistrajektorie basierend auf zumindest einem Zielzeitpunkt nach der spezifizierten Zeitperiode unter Verwendung des Zwischennetzwerkmodells vorhergesagt wird, um das Trajektorienvorhersageergebnis zu erhalten, wobei das Verfahren ferner folgende Schritte aufweist:

iteratives Anpassen des Modellparameters des zu trainierenden Modells durch Runden, bis eine voreingestellte Trainingsbeendigungsbedingung erreicht ist; und Erhalten eines Trajektorienvorhersagemodells basierend auf dem zu trainierenden Modell, das erhalten wird, nachdem die voreingestellte Trainingsbeendigungsbedingung erreicht ist, wobei das Trajektorienvorhersagemodell dazu konfiguriert ist, ein Trajektorienvorhersageergebnis zu erzeugen, das für eine Fahrassistenzsteuerung des autonomen Fahrzeugs bereitgestellt wird,

wobei die zumindest eine Trajektorienvorhersageaktion zumindest eines aufweist, das ausgewählt ist aus: für ein Zielhindernis in zumindest einem Hindernis, Bestimmen eines zeitlichen Interaktionsmerkmals für das Zielhindernis;

Bestimmen eines räumlichen Interaktionsmerkmals zwischen dem Zielhindernis und einem anderen Hindernis; oder

Bestimmen eines Umgebungsinteraktionsmerkmals zwischen dem Zielhindernis und einer Reiseumgebung,

wobei das Zielhindernis ein beliebiges des zumindest einen Hindernisses aufweist und das andere Hindernis ein anderes Hindernis als das Zielhindernis in dem zumindest einen Hindernis aufweist.

2. Verfahren gemäß Anspruch 1, bei dem das Durchführen, unter Verwendung des Zwischennetzwerkmodells, der zumindest einen Trajektorienvorhersageaktion basierend auf den Trainingsmusterdaten, die durch die erste Aktionsauswahlstrategie angezeigt werden, um das Trajektorienvorhersageergebnis zu erhalten, folgende Schritte aufweist:

als Reaktion auf die zumindest eine Trajektorienvorhersageaktion, die das Bestimmen des zeitlichen Interaktionsmerkmals aufweist, Bestimmen des zeitlichen Interaktionsmerkmals für das Zielhindernis gemäß einer Ortsinformation des Zielhindernisses, die durch die Trainingsmusterdaten angezeigt wird, wobei die Ortsinformation des Zielhindernisses auf zumindest einem historischen Zeitpunkt basiert; und Durchführen einer Hindernistrajektorienvorhersage basierend auf dem zeitlichen Interaktionsmerkmal, um das Trajektorienvorhersageergebnis zu erhalten.

3. Verfahren gemäß Anspruch 1, bei dem das Durchführen, unter Verwendung des Zwischennetzwerkmodells, der zumindest einen Trajektorienvorhersageaktion basierend auf den Trainingsmusterdaten, die durch die erste Aktionsauswahlstrategie angezeigt werden, um das Trajektorienvorhersageergebnis zu erhalten, folgende Schritte aufweist:

als Reaktion auf die zumindest eine Trajektorienvorhersageaktion, die das Bestimmen des räumlichen Interaktionsmerkmals aufweist, Bestimmen eines räumlichen Interaktionsuntermerkmals basierend auf jedem historischen Zeitpunkt zwischen dem Zielhindernis und dem anderen Hindernis gemäß einer Ortsinformation jedes Hindernisses, die durch die Trainingsmusterdaten angezeigt wird, wobei die Ortsinformation jedes Hindernisses auf zumindest einem historischen Zeitpunkt basiert; Durchführen einer Gewichtung an dem räumlichen Interaktionsuntermerkmal basierend auf jedem historischen Zeitpunkt gemäß einer voreingestellten ersten Aufmerksamkeitsmatrix, um das räumliche Interaktionsmerkmal zu erhalten; und Durchführen einer Hindernistrajektorienvorhersage basierend auf dem räumlichen Interaktionsmerkmal, um das Trajektorienvorhersageergebnis zu erhalten.

4. Verfahren gemäß Anspruch 1, bei dem

die Trainingsmusterdaten eine Ortsinformation des Zielhindernisses basierend auf zumindest einem historischen Zeitpunkt und einer Straßeninformation der Reiseumgebung anzeigen, und wobei das Durchführen, unter Verwendung des Zwischennetzwerkmodells, der zumindest einen Trajektorienvorhersageaktion basierend auf den Trainingsmusterdaten, die durch die erste Aktionsauswahlstrategie angezeigt werden, um das Trajektorienvorhersageergebnis zu erhalten, folgende Schritte aufweist:

als Reaktion auf die zumindest eine Trajektorienvorhersageaktion, die das Bestimmen des Umgebungsinteraktionsmerkmals aufweist,

Bestimmen zumindest eines Trajektorienvektors für das Zielhindernis gemäß der Ortsinformation des Zielhindernisses basierend auf zumindest einem historischen Zeitpunkt;

Bestimmen zumindest eines Straßenvektors gemäß der Straßeninformation der Reiseumgebung;

Bestimmen des Umgebungsinteraktionsmerkmals, das dem Zielhindernis zugeordnet ist, gemäß dem zumindest einen Trajektorienvektor und dem zumindest einen Straßenvektor; und

Durchführen einer Hindernistrajektorienvorhersage basierend auf dem Umgebungsinteraktionsmerkmal, um das Trajektorienvorhersageergebnis zu erhalten.

5.  Verfahren gemäß Anspruch 4, bei dem das Bestimmen des Umgebungsinteraktionsmerkmals, das dem Zielhindernis zugeordnet ist, gemäß dem zumindest einen Trajektorienvektor und dem zumindest einen Straßenvektor folgende Schritte aufweist:

Verbinden, für jeden des zumindest einen Trajektorienvektors, des Trajektorienvektors und eines Straßenvektors, der eine voreingestellte Abstandsschwellenwertbedingung mit dem Trajektorienvektor erfüllt, um eine Nachbarschaftsmatrix zu erzeugen; und

Durchführen einer Interaktionsinformationsextraktion basierend auf der Nachbarschaftsmatrix, um das Umgebungsinteraktionsmerkmal zu erhalten, das dem Zielhindernis zugeordnet ist.

6.  Verfahren gemäß Anspruch 1, das ferner folgenden Schritt aufweist:

zufälliges Auswählen einer Aktionsauswahlstrategie als die zweite Aktionsauswahlstrategie, als Reaktion darauf, dass der Belohnungsfunktionswert kleiner oder gleich dem voreingestellten Belohnungsschwellenwert ist oder eine Anpassungsrunde für den Modellparameter des zu trainierenden Modells kleiner als ein voreingestellter Rundenschwellenwert ist.

7.  Computerimplementiertes Verfahren (500) zum Vorhersagen einer Trajektorie, wobei das Verfahren (500) von einem autonomen Fahrzeug in einem unbemannten Fahrszenario implementiert wird, wobei das Verfahren folgende Schritte aufweist:

Erfassen (S510) von zu verarbeitenden Quelldaten; und

Durchführen (S520) zumindest einer Trajektorienvorhersageaktion basierend auf den Quelldaten unter Verwendung eines Trajektorienvorhersagemodells, um ein Trajektorienvorhersageergebnis zu erhalten, wobei das Trajektorienvorhersagemodell unter Verwendung des Verfahrens gemäß einem der Ansprüche 1 bis 6 erzeugt wird.

8.  Vorrichtung (600) zum Trainieren eines Modells, wobei die Vorrichtung (600) in einem autonomen Fahrzeug in einem unbemannten Fahrszenario vorgesehen ist,
    wobei die Vorrichtung (600) folgende Merkmale aufweist:

ein erstes Verarbeitungsmodul (610), das dazu konfiguriert ist, einen Modellparameter eines zu trainierenden Modells für eine n-te Runde gemäß einer ersten Aktionsauswahlstrategie anzupassen, um ein Zwischennetzwerkmodell zu erhalten, wobei n=1, ..., N und N eine ganze Zahl größer als 1 ist;

ein zweites Verarbeitungsmodul (620), das dazu konfiguriert ist, unter Verwendung des Zwischennetzwerkmodells zumindest eine Trajektorienvorhersageaktion durchzuführen, die durch die erste Aktionsauswahlstrategie angezeigt wird, um ein Trajektorienvorhersageergebnis zu erhalten, wobei die zumindest eine Trajektorienvorhersageaktion auf Trainingsmusterdaten basiert;

ein drittes Verarbeitungsmodul (630), das dazu konfiguriert ist, eine zweite Aktionsauswahlstrategie gemäß dem Trajektorienvorhersageergebnis und der ersten Aktionsauswahlstrategie zu bestimmen; und

ein viertes Verarbeitungsmodul (640), das dazu konfiguriert ist, den Modellparameter des zu trainierenden Modells für eine (n+1)-te Runde gemäß der zweiten Aktionsauswahlstrategie anzupassen,

wobei die erste Aktionsauswahlstrategie einen Steuerparameter für die zumindest eine Trajektorienvorhersageaktion aufweist,
wobei das dritte Verarbeitungsmodul (630) folgende Merkmale aufweist:

ein zehntes Verarbeitungsuntermodul, das dazu konfiguriert ist, einen Belohnungsfunktionswert für die erste Aktionsauswahlstrategie gemäß dem Trajektorienvorhersageergebnis und einer Hindernistrajektorienkennzeichnung zu bestimmen, die durch Verifizierungsmusterdaten angezeigt wird; und

eine dritte Verarbeitungseinheit, die dazu konfiguriert ist, als Reaktion darauf, dass der Belohnungsfunktionswert größer als ein voreingestellter Belohnungsschwellenwert ist, den Steuerparameter in der ersten Aktionsauswahlstrategie gemäß dem Belohnungsfunktionswert anzupassen, um die zweite Aktionsauswahlstrategie zu erhalten,

wobei die Verifizierungsmusterdaten eine reale Hindernistrajektorie anzeigen, die dem zumindest einen Zielzeitpunkt zugeordnet ist, und die reale Hindernistrajektorie, die durch die Verifizierungsmusterdaten angezeigt wird, als die Hindernistrajektorienkennzeichnung verwendet wird,

wobei das erste Verarbeitungsmodul (610) ferner dazu konfiguriert ist:

> aus einem Kandidatenoperationsmodulpool x Kandidatenoperationsmodule gemäß der ersten Aktionsauswahlstrategie auszuwählen, wobei x eine ganze Zahl größer als 0 ist; und
> den Modellparameter des zu trainierenden Modells für die n-te Runde basierend auf den ausgewählten x Kandidatenoperationsmodulen anzupassen, um das Zwischennetzwerkmodell zum Implementieren einer Funktion der x Kandidatenoperationsmodule zu erhalten,
> wobei die Trainingsmusterdaten Hinderniszustandsdaten und Reiseumgebungsdaten basierend auf einer spezifizierten Zeitperiode aufweisen, und wobei unter Verwendung der Trainingsmusterdaten als Eingabedaten eine Hindernistrajektorie basierend auf zumindest einem Zielzeitpunkt nach der spezifizierten Zeitperiode unter Verwendung des Zwischennetzwerkmodells vorhergesagt wird, um das Trajektorienvorhersageergebnis zu erhalten,

wobei die Vorrichtung (600) ferner ein sechstes Verarbeitungsmodul aufweist, das dazu konfiguriert ist:

> den Modellparameter des zu trainierenden Modells iterativ durch Runden anzupassen, bis eine voreingestellte Trainingsbeendigungsbedingung erreicht ist; und
> ein Trajektorienvorhersagemodell basierend auf dem zu trainierenden Modell zu erhalten, das erhalten wird, nachdem die voreingestellte Trainingsbeendigungsbedingung erreicht ist, wobei das Trajektorienvorhersagemodell dazu konfiguriert ist, ein Trajektorienvorhersageergebnis zu erzeugen, das für eine Fahrassistenzsteuerung des autonomen Fahrzeugs bereitgestellt wird,

wobei die zumindest eine Trajektorienvorhersageaktion zumindest eines aufweist, das ausgewählt ist aus: für ein Zielhindernis in zumindest einem Hindernis,

Bestimmen eines zeitlichen Interaktionsmerkmals für das Zielhindernis;

Bestimmen eines räumlichen Interaktionsmerkmals zwischen dem Zielhindernis und einem anderen Hindernis;

Bestimmen eines Umgebungsinteraktionsmerkmals zwischen dem Zielhindernis und einer Reiseumgebung,

wobei das Zielhindernis ein beliebiges des zumindest einen Hindernisses aufweist und das andere Hindernis ein anderes Hindernis als das Zielhindernis in dem zumindest einen Hindernis aufweist.

**9.** Vorrichtung (600) gemäß Anspruch 8, bei der das zweite Verarbeitungsmodul (620) folgende Merkmale aufweist:

> ein erstes Verarbeitungsuntermodul, das dazu konfiguriert ist, als Reaktion auf die zumindest eine Trajektorienvorhersageaktion, die das Bestimmen des zeitlichen Interaktionsmerkmals aufweist, das zeitliche Interaktionsmerkmal für das Zielhindernis gemäß einer Ortsinformation des Zielhindernisses zu bestimmen, die durch die Trainingsmusterdaten angezeigt wird, wobei die Ortsinformation des Zielhindernisses auf zumindest einem historischen Zeitpunkt basiert; und
> ein zweites Verarbeitungsuntermodul, das dazu konfiguriert ist, eine Hindernistrajektorienvorhersage basierend auf dem zeitlichen Interaktionsmerkmal durchzuführen, um das Trajektorienvorhersageergebnis zu erhalten.

**10.** Vorrichtung (600) gemäß Anspruch 8, bei der das zweite Verarbeitungsmodul (620) folgende Merkmale aufweist:

> ein drittes Verarbeitungsuntermodul, das dazu konfiguriert ist, als Reaktion auf die zumindest eine Trajektorienvorhersageaktion, die das Bestimmen des räumlichen Interaktionsmerkmals aufweist, ein räumliches Interaktionsuntermerkmal basierend auf jedem historischen Zeitpunkt zwischen dem Zielhindernis und dem anderen Hindernis gemäß einer Ortsinformation jedes Hindernisses zu bestimmen, die durch die Trainingsmusterdaten angezeigt wird, wobei die Ortsinformation jedes Hindernisses auf zumindest einem historischen Zeitpunkt basiert;

ein viertes Verarbeitungsuntermodul, das dazu konfiguriert ist, eine Gewichtung an dem räumlichen Interaktionsuntermerkmal basierend auf jedem historischen Zeitpunkt gemäß einer voreingestellten ersten Aufmerksamkeitsmatrix durchzuführen, um das räumliche Interaktionsmerkmal zu erhalten; und

ein fünftes Verarbeitungsuntermodul, das dazu konfiguriert ist, eine Hindernistrajektorienvorhersage basierend auf dem räumlichen Interaktionsmerkmal durchzuführen, um das Trajektorienvorhersageergebnis zu erhalten.

11. Vorrichtung (700) zum Vorhersagen einer Trajektorie, wobei die Vorrichtung (700) in einem autonomen Fahrzeug in einem unbemannten Fahrszenario vorgesehen ist, wobei die Vorrichtung (700) ferner folgende Merkmale aufweist:

ein Erfassungsmodul (710), das dazu konfiguriert ist, zu verarbeitende Quelldaten zu erfassen; und

ein fünftes Verarbeitungsmodul (720), das dazu konfiguriert ist, zumindest eine Trajektorienvorhersageaktion basierend auf den Quelldaten unter Verwendung des Trajektorienvorhersagemodells durchzuführen, um ein Trajektorienvorhersageergebnis zu erhalten, wobei das Trajektorienvorhersagemodell durch die Vorrichtung gemäß einem der Ansprüche 8 bis 10 erzeugt wird.

**Revendications**

1. Procédé mis en oeuvre par ordinateur consistant à former un modèle, dans lequel le modèle est utilisé par un véhicule autonome dans un scénario de conduite sans pilote,

le procédé comprenant le fait de :

ajuster (S210) un paramètre de modèle d'un modèle à former pour un n$^{\text{ème}}$ passage en fonction d'une première stratégie de sélection d'action, de manière à obtenir un modèle de réseau intermédiaire, dans lequel n=1, ... N, et N est un nombre entier supérieur à 1 ;

réaliser (S220), en utilisant le modèle de réseau intermédiaire, au moins une action de prédiction de trajectoire indiquée par la première stratégie de sélection d'action, de manière à obtenir un résultat de prédiction de trajectoire, dans lequel la au moins une action de prédiction de trajectoire est basée sur des données d'échantillon de formation ;

déterminer (S230) une deuxième stratégie de sélection d'action en fonction du résultat de prédiction de trajectoire et de la première stratégie de sélection d'action ; et

ajuster (S240) le paramètre de modèle du modèle à former pour un (n+1)$^{\text{ème}}$ passage en fonction de la deuxième stratégie de sélection d'action,

dans lequel la première stratégie de sélection d'action comprend un paramètre de commande pour la au moins une action de prédiction de trajectoire,

dans lequel la détermination (S230) d'une deuxième stratégie de sélection d'action en fonction du résultat de prédiction de trajectoire et de la première stratégie de sélection d'action comprend le fait de :

déterminer (S310) une valeur de fonction de récompense pour la première stratégie de sélection d'action en fonction du résultat de prédiction de trajectoire et d'une étiquette de trajectoire d'obstacle indiquée par des données d'échantillon de vérification ; et

ajuster, en réponse à la valeur de fonction de récompense qui est supérieure à une valeur seuil de récompense prédéfinie, le paramètre de commande dans la première stratégie de sélection d'action en fonction de la valeur de fonction de récompense, de manière à obtenir la deuxième stratégie de sélection d'action,

dans lequel les données d'échantillon de vérification indiquent une trajectoire réelle d'obstacle associée à au moins un moment cible, et la trajectoire réelle d'obstacle indiquée par les données d'échantillon de vérification est utilisée comme étiquette de trajectoire d'obstacle,

dans lequel l'ajustement (S210) d'un paramètre de modèle d'un modèle à former pour un n$^{\text{ème}}$ passage en fonction d'une première stratégie de sélection d'action, de manière à obtenir un modèle de réseau intermédiaire, comprend le fait de :

sélectionner, à partir d'un groupe de modules d'opération candidats, x modules d'opération candidats en fonction de la première stratégie de sélection d'action, dans lequel x est un nombre entier supérieur à 0 ; et

ajuster le paramètre de modèle du modèle à former pour le n^ème passage sur la base des x modules d'opération candidats sélectionnés, de manière à obtenir le modèle de réseau intermédiaire pour mettre en oeuvre une fonction des x modules d'opération candidats, dans lequel les données d'échantillon de formation comprennent des données d'état d'obstacle et des données d'environnement de déplacement sur la base d'une période de temps spécifiée, et dans lequel en utilisant les données d'échantillon de formation en tant que données d'entrée, une trajectoire d'obstacle basée au moins sur un moment cible après la prédiction de la période de temps spécifiée en utilisant le modèle de réseau intermédiaire, de manière à obtenir le résultat de prédiction de trajectoire,

dans lequel le procédé comprend en outre le fait de :

ajuster le paramètre de modèle du modèle à former de manière itérative par passages jusqu'à ce qu'une condition de fin de formation prédéfinie soit atteinte ; et obtenir un modèle de prédiction de trajectoire sur la base du modèle à former obtenu après que la condition de fin de formation prédéfinie a été atteinte, dans lequel le modèle de prédiction de trajectoire est configuré pour générer un résultat de prédiction de trajectoire fourni pour une commande d'aide à la conduite du véhicule autonome,

dans lequel la au moins une action de prédiction de trajectoire comprend au moins une sélectionnée parmi : pour un obstacle cible dans au moins un obstacle,

déterminer une caractéristique d'interaction temporelle pour l'obstacle cible ;

déterminer une caractéristique d'interaction spatiale entre l'obstacle cible et un autre obstacle ; ou

déterminer une caractéristique d'interaction environnementale entre l'obstacle cible et un environnement de déplacement,

dans lequel l'obstacle cible comprend l'un quelconque du au moins un obstacle, et l'autre obstacle comprend un obstacle dans le au moins un obstacle autre que l'obstacle cible.

2. Procédé selon la revendication 1, dans lequel la réalisation, en utilisant le modèle de réseau intermédiaire, de la au moins une action de prédiction de trajectoire sur la base des données d'échantillon de formation indiquées par la première stratégie de sélection d'action de manière à obtenir le résultat de prédiction de trajectoire comprend le fait de :

en réponse à la au moins une action de prédiction de trajectoire comprenant la détermination de la caractéristique d'interaction temporelle :

déterminer la caractéristique d'interaction temporelle pour l'obstacle cible, en fonction d'une information d'emplacement de l'obstacle cible indiqué par les données d'échantillon de formation, dans lequel l'information d'emplacement de l'obstacle cible est basée sur au moins un moment historique ; et

réaliser une prédiction de trajectoire d'obstacle sur la base de la caractéristique d'interaction temporelle, de manière à obtenir le résultat de prédiction de trajectoire.

3. Procédé selon la revendication 1, dans lequel la réalisation, en utilisant le modèle de réseau intermédiaire, de la au moins une action de prédiction de trajectoire sur la base des données d'échantillon de formation indiquées par la première stratégie de sélection d'action de manière à obtenir le résultat de prédiction de trajectoire comprend le fait de :

en réponse à la au moins une action de prédiction de trajectoire comprenant la détermination de la caractéristique d'interaction spatiale :

déterminer une sous-caractéristique d'interaction spatiale sur la base de chaque moment historique entre l'obstacle cible et l'autre obstacle, en fonction d'une information d'emplacement de chaque obstacle indiqué par les données d'échantillon de formation, dans lequel l'information d'emplacement de chaque obstacle est basée sur au moins un moment historique ;

réaliser une pondération sur la sous-caractéristique d'interaction spatiale sur la base de chaque moment historique en fonction d'une première matrice d'attention prédéfinie, de manière à obtenir la caractéristique d'interaction spatiale ; et

réaliser une prédiction de trajectoire d'obstacle sur la base de la caractéristique d'interaction spatiale, de manière à obtenir le résultat de prédiction de trajectoire.

4. Procédé selon la revendication 1, dans lequel

les données d'échantillon de formation indiquent une information d'emplacement de l'obstacle cible sur la base d'au moins un moment historique et une information de route de l'environnement de déplacement, et

dans lequel la réalisation, en utilisant le modèle de réseau intermédiaire, de la au moins une action de prédiction de trajectoire sur la base des données d'échantillon de formation indiquées par la première stratégie de sélection d'action de manière à obtenir le résultat de prédiction de trajectoire comprend le fait de :

en réponse à la au moins une action de prédiction de trajectoire comprenant la détermination de la caractéristique d'interaction environnementale,

déterminer au moins un vecteur de trajectoire pour l'obstacle cible, en fonction de l'information d'emplacement de l'obstacle cible sur la base d'au moins un moment historique ;

déterminer au moins un vecteur de route en fonction de l'information de route de l'environnement de déplacement ;

déterminer la caractéristique d'interaction environnementale associée à l'obstacle cible en fonction du au moins un vecteur de trajectoire et du au moins un vecteur de route ; et

réaliser une prédiction de trajectoire d'obstacle sur la base de la caractéristique d'interaction environnementale, de manière à obtenir le résultat de prédiction de trajectoire.

5. Procédé selon la revendication 4, dans lequel la détermination de la caractéristique d'interaction environnementale associée à l'obstacle cible en fonction du au moins un vecteur de trajectoire et du au moins un vecteur de route comprend le fait de :

relier, pour chacun du au moins un vecteur de trajectoire, le vecteur de trajectoire et un vecteur de route répondant à une condition de valeur seuil de distance prédéfinie avec le vecteur de trajectoire, de manière à générer une matrice d'adjacence ; et

réaliser une extraction d'information d'interaction sur la base de la matrice d'adjacence, de manière à obtenir la caractéristique d'interaction environnementale associée à l'obstacle cible.

6. Procédé selon la revendication 1, comprenant en outre le fait de :
sélectionner de manière aléatoire une stratégie de sélection d'action en tant que deuxième stratégie de sélection d'action, en réponse à la valeur de fonction de récompense qui est inférieure ou égale à la valeur seuil de récompense prédéfinie ou un passage d'ajustement pour le paramètre de modèle du modèle à former qui est inférieur à une valeur seuil de passage prédéfinie.

7. Procédé (500) mis en oeuvre par ordinateur consistant à prédire une trajectoire, dans lequel le procédé (500) est mis en oeuvre par un véhicule autonome dans un scénario de conduire sans pilote,
le procédé comprenant le fait de :

acquérir (S510) des données de source à traiter ; et

réaliser (S520) au moins une action de prédiction de trajectoire sur la base des données de source en utilisant un modèle de prédiction de trajectoire, de manière à obtenir un résultat de prédiction de trajectoire, dans lequel le modèle de prédiction de trajectoire est généré en utilisant le procédé selon l'une quelconque des revendications 1 à 6.

8. Appareil (600) de formation d'un modèle, dans lequel l'appareil (600) est disposé dans un véhicule autonome dans un scénario de conduire sans pilote,
l'appareil (600) comprenant :

un premier module de traitement (610) configuré pour ajuster un paramètre de modèle d'un modèle à former pour un $n^{\text{ème}}$ passage en fonction d'une première stratégie de sélection d'action, de manière à obtenir un modèle de réseau intermédiaire, dans lequel n=1, ... N, et N est un nombre entier supérieur à 1 ;

un deuxième module de traitement (620) configuré pour réaliser, en utilisant le modèle de réseau intermédiaire, au moins une action de prédiction de trajectoire indiquée par la première stratégie de sélection d'action, de manière à obtenir un résultat de prédiction de trajectoire, dans lequel la au moins une action de prédiction de trajectoire est basée sur des données d'échantillon de formation ;

un troisième module de traitement (630) configuré pour déterminer une deuxième stratégie de sélection d'action en fonction du résultat de prédiction de trajectoire et de la première stratégie de sélection d'action ; et

un quatrième module de traitement (640) configuré pour ajuster le paramètre de modèle du modèle à former pour un $(n+1)^{\text{ème}}$ passage en fonction de la deuxième stratégie de sélection d'action,

dans lequel la première stratégie de sélection d'action comprend un paramètre de commande pour la au moins une action de prédiction de trajectoire,

dans lequel le troisième module de traitement (630) comprend :

un dixième sous-module de traitement configuré pour déterminer une valeur de fonction de récompense pour la première stratégie de sélection d'action en fonction du résultat de prédiction de trajectoire et d'une étiquette de trajectoire d'obstacle indiquée par des données d'échantillon de vérification ; et

une troisième unité de traitement configurée pour ajuster, en réponse à la valeur de fonction de récompense qui est supérieure à une valeur seuil de récompense prédéfinie, le paramètre de commande dans la première stratégie de sélection d'action en fonction de la valeur de fonction de récompense, de manière à obtenir la deuxième stratégie de sélection d'action,

dans lequel les données d'échantillon de vérification indiquent une trajectoire réelle d'obstacle associée à au moins un moment cible, et la trajectoire réelle d'obstacle indiquée par les données d'échantillon de vérification est utilisée comme étiquette de trajectoire d'obstacle,

dans lequel le premier module de traitement (610) est en outre configuré pour :

sélectionner, à partir d'un groupe de modules d'opération candidats, x modules d'opération candidats en fonction de la première stratégie de sélection d'action, dans lequel x est un nombre entier supérieur à 0 ; et

ajuster le paramètre de modèle du modèle à former pour le $n^{\text{ème}}$ passage sur la base des x modules d'opération candidats sélectionnés, de manière à obtenir le modèle de réseau intermédiaire pour mettre en oeuvre une fonction des x modèles d'opération candidats,

dans lequel les données d'échantillon de formation comprennent des données d'état d'obstacle et des données d'environnement de déplacement sur la base d'une période de temps spécifiée, et dans lequel en utilisant les données d'échantillon de formation en tant que données d'entrée, une trajectoire d'obstacle basée au moins sur un moment cible après la prédiction de la période de temps spécifiée en utilisant le modèle de réseau intermédiaire, de manière à obtenir le résultat de prédiction de trajectoire,

dans lequel l'appareil (600) comprend en outre un sixième module de traitement configuré pour :

ajuster le paramètre de modèle du modèle à former de manière itérative par passages jusqu'à ce qu'une condition de fin de formation prédéfinie soit atteinte ; et obtenir un modèle de prédiction de trajectoire sur la base du modèle à former obtenu après que la condition de fin de formation prédéfinie a été atteinte, dans lequel le modèle de prédiction de trajectoire est configuré pour générer un résultat de prédiction de trajectoire fourni pour une commande d'aide à la conduite du véhicule autonome, dans lequel la au moins une action de prédiction de trajectoire comprend au moins une sélectionnée parmi : pour un obstacle cible dans au moins un obstacle,

déterminer une caractéristique d'interaction temporelle pour l'obstacle cible ;

déterminer une caractéristique d'interaction spatiale entre l'obstacle cible et un autre obstacle ;

déterminer une caractéristique d'interaction environnementale entre l'obstacle cible et un environnement de déplacement,

dans lequel l'obstacle cible comprend l'un quelconque du au moins un obstacle, et l'autre obstacle comprend un obstacle dans le au moins un obstacle autre que l'obstacle cible.

9. Appareil (600) selon la revendication 8, dans lequel le deuxième module de traitement (620) comprend :

un premier sous-module de traitement configuré pour déterminer, en réponse à la au moins une action de prédiction de trajectoire comprenant la détermination de la caractéristique d'interaction temporelle, la caractéristique d'interaction temporelle pour l'obstacle cible en fonction d'une information d'emplacement de l'obstacle cible indiqué par les données d'échantillon de formation, dans lequel l'information d'emplacement de l'obstacle cible est basée sur au moins un moment historique ; et

un deuxième sous-module de traitement configuré pour réaliser une prédiction de trajectoire d'obstacle sur la base de la caractéristique d'interaction temporelle, de manière à obtenir le résultat de prédiction de trajectoire.

10. Appareil (600) selon la revendication 8, dans lequel le deuxième module de traitement (620) comprend :

un troisième sous-module de traitement configuré pour déterminer, en réponse à la au moins une action de prédiction de trajectoire comprenant la détermination de la caractéristique d'interaction spatiale, une sous-caractéristique d'interaction spatiale sur la base de chaque moment historique entre l'obstacle cible et l'autre obstacle en fonction d'une information d'emplacement de chaque obstacle indiqué par les données d'échantillon de formation, dans lequel l'information d'emplacement de chaque obstacle est basée sur au moment historique ;
un quatrième sous-module de traitement configuré pour réaliser une pondération sur la sous-caractéristique d'interaction spatiale sur la base de chaque moment historique en fonction d'une première matrice d'attention prédéfinie, de manière à obtenir la caractéristique d'interaction spatiale ; et
un cinquième sous-module de traitement configuré pour réaliser une prédiction de trajectoire d'obstacle sur la base de la caractéristique d'interaction spatiale, de manière à obtenir le résultat de prédiction de trajectoire.

11. Appareil (700) de prédiction d'une trajectoire, dans lequel l'appareil (700) est disposé dans un véhicule autonome dans un scénario de conduite sans pilote, l'appareil (700) comprenant en outre :

un module d'acquisition (710) configuré pour acquérir des données de source à traiter ; et
un cinquième module de traitement (720) configuré pour réaliser au moins une action de prédiction de trajectoire sur la base des données de source en utilisant le modèle de prédiction de trajectoire, de manière à obtenir un résultat de prédiction de trajectoire, dans lequel le modèle de prédiction de trajectoire est généré par l'appareil selon l'une quelconque des revendications 8 à 10.

100

101

102

103

FIG. 1

200

A model parameter of a to-be-trained model is adjusted for an $n^{th}$ round according to a first action selection strategy, so as to obtain an intermediate network model, where n=1, ... N, and N is an integer greater than 1 ⟍S210

At least one trajectory prediction action indicated by the first action selection strategy is performed by using the intermediate network model, so as to obtain a trajectory prediction result, where the at least one trajectory prediction action is based on training sample data ⟍S220

A second action selection strategy is determined according to the trajectory prediction result and the first action selection strategy ⟍S230

The model parameter of the to-be-trained model is adjusted for an $(n+1)^{th}$ round according to the second action selection strategy ⟍S240

FIG. 2

<u>300</u>

A model parameter of a to-be-trained model is adjusted for an $n^{th}$ round according to a first action selection strategy, so as to obtain an intermediate network model, where n=1, ... N, and N is an integer greater than 1 — S210

At least one trajectory prediction action indicated by the first action selection strategy is performed by using the intermediate network model, so as to obtain a trajectory prediction result, where the at least one trajectory prediction action is based on training sample data — S220

A reward function value for the first action selection strategy is determined according to the trajectory prediction result and an obstacle trajectory label indicated by verification sample data, and a second action selection strategy is determined according to the reward function value and the first action selection strategy — S310

The model parameter of the to-be-trained model is adjusted for an $(n+1)^{th}$ round according to the second action selection strategy — S240

FIG. 3

400

FIG. 4

500

| Source data to be processed is acquired | S510 |

$\downarrow$

| At least one trajectory prediction action based on the source data is performed by using a trajectory prediction model, so as to obtain a trajectory prediction result | S520 |

FIG. 5

600

A first processing module — 610

A second processing module — 620

A third processing module — 630

A fourth processing module — 640

FIG. 6

700

An acquisition module ~710

A fifth processing module ~720

FIG. 7

800

Computing unit ~801    ROM ~802    RAM ~803

~804

~805

I/O interface

Input unit ~806    Output unit ~807    Storage unit ~808    Communication unit ~809

FIG. 8

**EP 4 134 878 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021058588 A1

**Non-patent literature cited in the description**

- Continual Learning for Real-World Autonomous Systems: Algorithms, Challenges and Frameworks. **KHADIJA SHAHEEN et al.** ARXIV.ORG. CORNELL UNIVERSITY LIBRARY, 201 OLIN LIBRARY COR- NELL UNIVERSITY, 26 May 2021